# DEMANDE DE BREVET EUROPEEN

(11) **EP 0 884 089 A1**
(43) Date de publication de la demande: **16.12.1998**
(21) Numéro de dépôt: 98401365.6
(22) Date de dépôt: 08.06.1998
(51) Int. Cl.: B01D 53/053, B01D 53/047

(54) **Appareil et procédé de séparation de mélanges gazeux par adsorption à variation de pression**

(30) Priorité: 09.06.1997 FR 9707116
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Monereau, Christian, 75011 Paris (FR); Derive, Nathalie, 75010 Paris (FR); Petit, Pierre, 91370 Verrieres-Le-Buisson (FR)
(74) Mandataire: Le Moenner, Gabriel

(57) **Abrégé**

L'appareil de séparation de mélange gazeux par adsorption à variation de pression (PSA) comprend au moins un adsorbeur A et une première capacité T sélectivement connectable à l'adsorbeur pour emmagasiner temporairement du gaz extrait de l'adsorbeur et réintroduit dans ce dernier lors d'un cycle, la capacité T ayant un volume intérieur libre fixe V, une direction principale verticale de hauteur h, avec la relation 25 ≤ h³/V ≤ 150, la fraction gazeuse pénétrant dans et sortant de la capacité T à la partie inférieure de cette dernière et y séjournant pendant une durée n'excédant pas 300 secondes.

Application notamment à la production d'oxygène ou d'hydrogène.

## Description

La présente invention concerne les appareils de séparation de mélanges gazeux par adsorption à variation de pression (dits PSA), du type comprenant au moins un adsorbeur et au moins une première capacité sélectivement connectable, par au moins une première ligne, à l'adsorbeur pour emmagasiner temporairement une fraction gazeuse extraite de l'adsorbeur et réintroduite dans ce dernier lors d'un cycle.

Un grand nombre de cycles PSA utilisés pour la séparation d'un mélange gazeux composite comportent une étape d'élution et/ou une étape de recompression au moyen d'une fraction gazeuse enrichie dans le constituant le moins adsorbable du flux gazeux initial extraite de l'adsorbeur au cours d'une étape de dépressurisation. On trouve des exemples, par exemple pour la production d'hydrogène, dans le document US-A-4 512 779, ou, pour la production d'oxygène, dans le document EP-A-0 743 087, tous deux au nom de la Demanderesse. La fraction gazeuse servant à l'élution et/ou à la recompression étant produite avec une composition progressivement de moins en moins riche en le constituant le moins adsorbable lors de l'étape de décompression sus-mentionnée, il est avantageux de stocker cette fraction dans un réservoir permettant de conserver le gradient de composition correspondant pour réinjecter ensuite dans l'adsorbant ladite fraction gazeuse avec, cette fois, une pureté croissante. Des exemples de capacités à ségrégation longitudinale sont décrits par exemple dans les documents US-A- 4 512 779 sus-mentionné, EP-A-0 513 746 (Toyo) ou US-A-5 565 018 (Praxair). Ces documents décrivent des structures de réservoir délicates ou onéreuses, avec des garnissages internes et/ou des dimensions inutilisables à l'échelon industriel.

La présente invention a pour objet de proposer un appareil de séparation permettant, dans un agencement simple, robuste, et de faibles coûts de fabrication, d'obtenir des performances améliorées, au moins équivalentes à celles obtenues avec les architectures de capacités décrites dans les documents du paragraphe ci-dessus.

Pour ce faire, selon une caractéristique de l'invention, la première capacité a un volume intérieur libre fixe (V), une direction principale verticale et une hauteur (h) telle que 25 ≤ h³/V ≤ 150, la première ligne communicant avec la partie inférieure de la capacité.

Selon une caractéristique plus particulière de l'invention, la première capacité est cylindrique, de diamètre (d), avec 4,5 ≤ h/d ≤ 10.

La présente invention a également pour objet un procédé de séparation PSA mettant en oeuvre un tel appareil comprenant, en séquence, une phase de production, une phase de régénération/élution, et une phase de recompression, dans lequel la durée de stockage de la fraction gazeuse dans la première capacité n'excède pas 300 secondes, typiquement est inférieure à 200 secondes.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique d'un appareil PSA mono-adsorbeur selon l'invention; et
- la figure 2 est une vue schématique d'un appareil PSA multi-adsorbeur selon l'invention.

Dans la description qui va suivre sur les dessins, les éléments identiques ou analogues sont repérés par les mêmes chiffres de référence, éventuellement indicés.

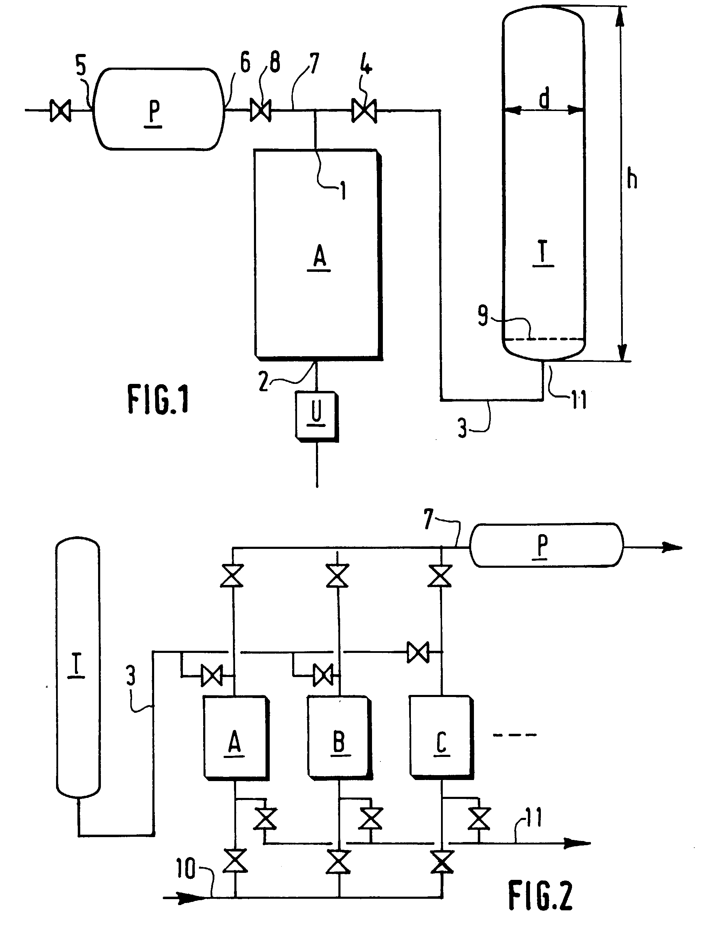

On reconnaît sur la figure 1 un appareil de séparation PSA pour la production d'oxygène à partir d'air du type décrit dans le document EP-A-0 743 087 sus-mentionné et comprenant essentiellement un adsorbeur unique A, une capacité de gaz de production P et une capacité de cycle T, connectables respectivement à la sortie 1 de l'adsorbeur A, dont l'entrée 2 est reliée à une unité de compression/aspiration à vannages de dérivation, comme décrit dans le document US-A-4 561 865, ou à machine tournante inversible comme décrit dans EP-A-0 743 087 sus-mentionné. La capacité de cycle T définit un volume interne simple, non partitionné, et comporte, typiquement à son extrémité inférieure, un port d'accès unique 11 via lequel elle est reliée à la sortie 1 de l'adsorbeur par une ligne 3 comportant une vanne d'isolation 4. La capacité de gaz de production P a un port de sortie 5 connectable à un circuit utilisateur et un port d'entrée 6 relié à la sortie 1 de l'adsorbeur A par une ligne 7 comportant une vanne 8.

Conformément à un aspect de l'invention, la capacité T a une direction principale verticale avec une hauteur h, la ligne 3 se raccordant à la capacité T à l'extrémité inférieure de cette dernière. Typiquement, comme représenté sur les figures, la capacité T a une forme cylindrique de diamètre d. Selon l'invention, la capacité T définit un volume intérieur fixe V, majoritairement libre, avantageusement complètement libre, c'est-à-dire dépourvu de cloisonnements, de garnissages ou de matériaux particulaires intérieurs. La hauteur h est corrélée au volume intérieur V de telle sorte que 25 ≤ h³/V ≤ 150, avantageusement avec 25 ≤ h³/V ≤ 120, de préférence avec 35 ≤ h³/V ≤ 100. Pour des capacités T cylindriques, ces dimensions se traduisent en première approximation par un rapport h/d compris entre 4,5 et 10, avantageusement entre 5 et 8.

Avec un tel agencement, l'effet de ségrégation dans la capacité T est obtenu naturellement : à chaque instant, le gaz introduit par le bas dans le volume constant fermé V de la capacité T provoque une compression de type adiabatique du gaz déjà contenu et son échauffement. Il se crée ainsi un gradient des températures croissant de bas en haut qui stabilise le volume gazeux contenu dans le réservoir, le gaz le plus chaud, donc le plus léger, se trouvant en partie supérieure. Cet effet de la température sur la densité des gaz est sensiblement plus important que l'effet, éventuellement en sens inverse de la variation, au demeurant relativement limitée, de composition de la fraction gazeuse. On notera que, lors de l'évacuation, le gaz résiduel dans la capacité T subit la décompression adiabatique inverse et se retrouve à la température initiale.

L'effet de ségrégation est d'autant plus marqué que la durée de stockage dans le réservoir est courte, de façon à minimiser les échanges thermiques internes et externes et la diffusion au sein du volume gazeux. Selon un aspect de l'invention, la durée de stockage de la fraction gazeuse dans la capacité T ne doit pas excéder 300 secondes et est avantageusement inférieure à 200 secondes, typiquement inférieure à 180 secondes.

En variante, la capacité T comprend avantageusement, à sa partie inférieure, à l'aplomb du port 11, une tôle ou une plaque perforée transversale 9, éventuellement à sections de perforations différentes entre les zones centrale et périphérique.

Le dispositif de la figure 1 est mis en oeuvre typiquement avec un cycle comprenant une phase de production suivie d'une phase de régénération/élution, elle-même suivie d'une phase de représsurisation sur laquelle enchaîne une nouvelle phase de production à pression croissante.

En phase de production la vanne 4 est fermée et la fraction la moins adsorbable du mélange gazeux traversant l'adsorbeur A passe dans et au travers de la capacité de gaz de production P.

A la fin de la phase de production, la vanne 8 est fermée et la vanne 4 s'ouvre pour une phase de dépressurisation de l'adsorbeur A au moins à co-courant, la fraction gazeuse sous pression à la partie supérieure de l'adsorbeur A passant dans la partie inférieure de la capacité T.

A la suite de cette phase de dépressurisation initiale, la vanne 4 est fermée et l'entrée 2 de l'adsorbeur est placée sous vide pour une phase de dépressurisation à contre-courant jusqu'à la pression basse de cycle, pouvant comprendre une phase finale d'élution à la pression basse du cycle par du gaz provenant de la capacité T, la vanne 4 étant alors ouverte (et la vanne 8 demeurant fermée).

La phase de recompression comporte une étape initiale de représsurisation par du gaz provenant de la capacité T, par exemple suivie d'une étape de repressurisation intermédiaire par du gaz de production provenant de la capacité P.

On a représenté sur la figure 2 un appareil PSA convenant pour la production d'hydrogène et comprenant au moins trois adsorbeurs A, B, C, dont les sorties sont connectables individuellement aux capacités T et P et dont les entrées sont connectables individuellement à une ligne d'alimentation en mélange gazeux 10 et à une ligne d'extraction de fraction gazeuse désorbée 11.

Dans le mode de réalisation de la figure 2, la capacité T sert uniquement aux étapes d'élution des différents adsorbeurs.

Quoique la présente invention ait été décrite en relation avec des modes de réalisation particuliers, elle ne s'en trouve pas limitée mais au contraire susceptible de modifications et de variantes qui apparaitront à l'homme de l'art. En particulier, l'appareil peut comporter deux adsorbeurs partageant une première capacité commune T et une deuxième capacité commune P.

## Revendications

1. Appareil de séparation de mélange gazeux par adsorption à variation de pression, comprenant au moins un adsorbeur (A) et au moins une première capacité (T) sélectivement connectable, par au moins une première ligne (3), à l'adsorbeur pour emmagasiner temporairement une fraction gazeuse extraite de l'adsorbeur et réintroduite dans ce dernier lors d'un cycle, caractérisé en ce que la première capacité (T) a un volume intérieur libre fixe (V), une direction principale verticale avec une hauteur h telle que 25 ≤ h³/V ≤ 150, la première ligne (3) communiquant avec la partie inférieure de la première capacité.

2. Appareil selon la revendication 1, caractérisé en ce que la première capacité est cylindrique de diamètre d, avec 4,5 ≤ h/d ≤ 10.

3. Appareil selon la revendication 1 ou la revendication 2, caractérisé en ce que la pemière capacité (T) a un port d'accès unique (11).

4. Appareil selon l'une des revendications 1 à 3, caractérisé en ce qu'il comprend une deuxième capacité (P) sélectivement connectable, par au moins une deuxième ligne (7), à l'adsorbeur (A) pour emmagasiner au moins temporairement une fraction gazeuse de production.

5. Procédé de séparation PSA mettant en oeuvre un appareil selon l'une des revendications précédentes, comprenant, en séquence, une phase de production, une phase de régénération/élution et une phase de recompression, la durée de stockage de la fraction gazeuse dans la première capacité (T) n'excédant pas 300 secondes.

6. Procédé selon la revendication 5, dans lequel la durée de stockage de la fraction gazeuse dans la première capacité (T) n'excède pas 200 secondes.

7. Procédé selon la revendication 5 ou la revendication 6, dans lequel la phase de régénération comporte au moins une étape de dépressurisation initiale lors de laquelle une fraction gazeuse émanant de l'adsorbeur (A) est adressée à la première capacité (T).

8. Procédé selon l'une des revendications 5 à 7, dans lequel la phase de régénération comprend une étape finale d'élution lors de laquelle la fraction gazeuse dans la première capacité (T) est adressée à contre-courant dans l'adsorbeur (A).

9. Procédé selon l'une des revendications 5 à 8, dans lequel la phase de repressurisation comporte une étape initiale de repressurisation lors de laquelle la fraction gazeuse dans la première capacité (T) est adressée à l'adsorbeur (A).

10. Procédé selon l'une des revendications 5 à 8, pour la production d'hydrogène à partir d'un mélange gazeux comprenant de l'hydrogène.

11. Procédé selon l'une des revendications 5 à 8, pour la production d'oxygène à partir d'air.
